# EUROPEAN PATENT SPECIFICATION

(11) **EP 0 987 093 B1**
(45) Date of publication and mention of the grant of the patent: **21.04.2004**
(21) Application number: 98307464.2
(22) Date of filing: 15.09.1998
(51) Int. Cl.: B29C 65/22

(54) **Hand-held electric sealer with detachable heat resistant cover sheet.**
Handbetätigtes elektrisches Schweissgerät mit abnehmbarer hitzebeständiger Abdeckfolie
Dispositif de soudage électrique à main avec une feuille de recouvrement détachable résistant à la chaleur

(43) Date of publication of application: 22.03.2000
(73) Proprietor: Welcome Company Ltd., Hsi Chih Town, Taipei Hsien (TW)
(72) Inventor: Chou, Ammy, Hsi Chih Town, Taipei Hsien (TW); Chang, Richard, Hsi Chih Town, Taipei Hsien (TW); Accumanno, Mario B., East Hanover, NJ 07936 (US)
(74) Representative: Stonehouse, Sidney William

(56) References cited:
- AU-A- 4 047 678
- DE-U- 9 004 188
- ES-A- 2 027 839
- FR-A- 2 040 757
- FR-A- 2 322 709
- GB-A- 901 758
- US-A- 3 115 731
- US-A- 5 374 806

## Description

### Field of the Invention

The present invention relates to an electric sealing apparatus, and more particularly to a hand-held electrical sealer having a detachable heat resistant cover sheet to protect the electric heating wire.

### Background of the Invention

A variety of hand-held electric sealing devices have been disclosed, and have appeared on the market. Examples of such devices are seen in Chinese Utility Pat. No. 91041 entitled "improved Structure of Sealer", in U.S. Pat. No. 5,142,123 entitled "Electric Sealer Energizable by Internal Battery Set or External AC Adapter", and in French Patent No FR2040757.

These electrical sealing devices commonly include a housing, a heating unit mounted in the housing, and a press unit pivotally attached to the housing that acts against the heating unit. The heating unit includes an electric heating wire. When an electric current passes through the electric heating wire, the electric heating wire produces heat for sealing plastic bags. In order to protect the electric heating wire against melted plastic material, a heat resistant cover sheet is covered over the electric heating wire. Because the heat resistant cover sheet is not replaceable, or is replaceable only with difficulty, the entire electric sealing device can be rendered useless if the heat resistant cover sheet is damaged.

A need exists for an electric heat sealer that eliminates the aforesaid problem, is hand-held and safe to use.

### Summary of the Preferred Embodiments

In accordance with the present invention, there is provided a hand-held electrical sealer including a housing, a heating unit mounted in the housing, a heat resistant cover sheet, and a press unit pivotally connected to the housing and acting against the heating unit. The heating unit includes a heat insulative base having a protrusive portion and an electric heating wire mounted on the protrusive portion of the heat insulative base. The heat resistant cover sheet is held within a frame and covers at least a portion of the electric heating wire. The frame includes retainer means that secure the heat resistant cover sheet removably to the protrusive portion so that the cover sheet can be removed for replacement without separating the press unit from the housing.

The retainer means may engage the protrusive portion of the base, or the housing.

In a preferred embodiment, the heat resistant cover sheet is a meshed member made from polytetrafluoroethylene (TEFLON™) or like material.

Preferably, the electric heating wire of the heating unit is energizable by an internal battery set, an external AC adapter or a combination of the two.

In preferred embodiments, the heat resistant cover sheet and the frame are fastened together by directly adhering the heat resistant cover sheet to the frame, directly molding the frame on the heat resistant cover sheet, or securing the heat resistant cover sheet to the frame in between an upper frame shell and bottom frame shell on the frame.

Because the heat resistant cover sheet is fastened to the frame and the frame is detachably fastened to the heating unit or the housing, the heat resistant cover sheet is replaceable when damaged.

In a preferred embodiment, each of the foregoing electrical sealers includes a plurality of electric heating wires secured to the heat insulative base of the heating unit.

According to still a further aspect of the present invention, there is provided a meshed polytetrafluoroethylene (TEFLON™) sheet or other similar material adapted to engage a frame as described herein.

According to an additional aspect of the present invention, the temporary heat resistant cover sheet is adapted to at least partially cover the electric heating wire of an electric sealer. The temporary heat resistant cover sheet is removable from the electric heating wire without damaging the electric heating wire.

Other objects, features and advantages of the present invention will become apparent to those skilled in the art from the following detailed description.

### Brief Description of the Drawings

The invention may be more readily understood by referring to the accompanying drawings in which
Figure 1 is a perspective view of a hand-held electrical sealer according to the present invention.
Figure 2 is an exploded view of the heating unit for the hand-held electrical sealer according to the present invention.
Figure 3 shows an alternative form of the heat insulative base according to the present invention.
Figure 4 shows an alternate form of the frame and another alternate form of the heat insulative base according to the present invention.
Figure 5 shows another alternate form of the frame and its positioning on the front cover plats relative to the heat insulative base according to the present invention.
.Figure 6 is a schematic drawing explaining replacement of the heat resistant cover sheet.
Figure 7 shows multiple electric heating wires disposed on the heat insulative base of Figure 3 according to the present invention.
Figure 8 is an exploded view of the heating unit of the electric heat sealer in accordance with an alternative embodiment of the present invention.

Like numerals refer to like parts throughout the several views of the drawings.

### Detailed Description of the Preferred Embodiments

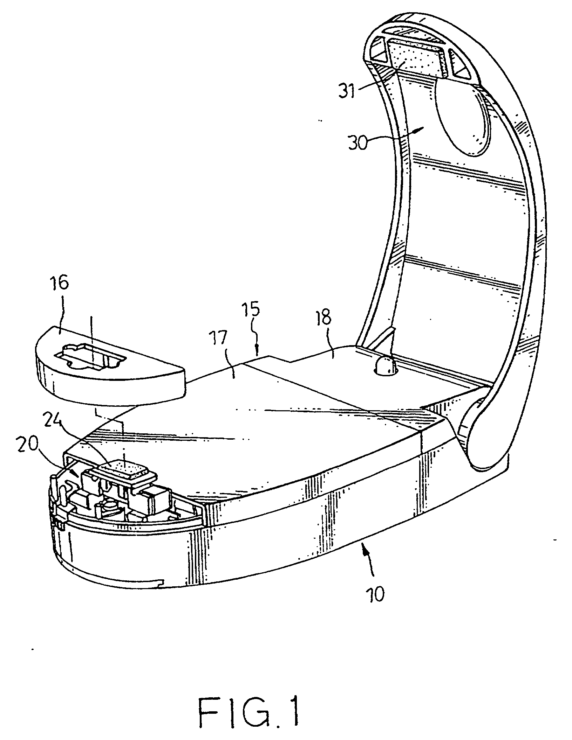

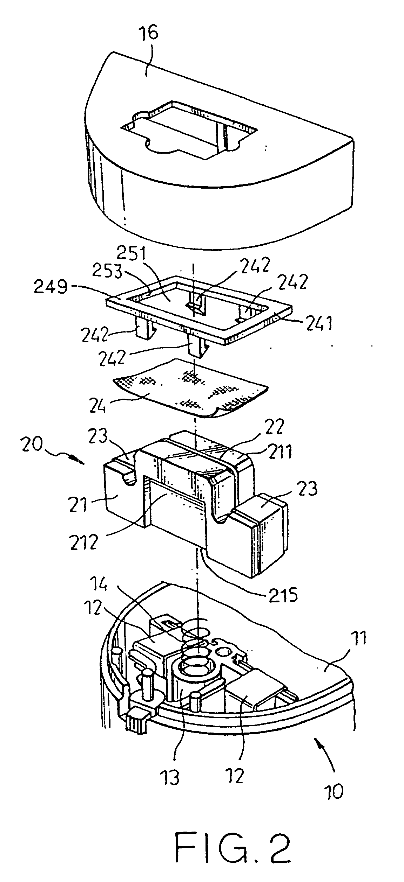

Referring to Figures 1 and 2, a first embodiment of a hand-held electric heat sealer in accordance with the present invention generally includes a housing 10, a heating unit 20, and a press unit 30.

The housing 10 includes a receiving chamber 11 which receives the heating unit 20 and battery (not shown), a pair of metal contact plates 12 mounted in the receiving chamber 11 at one end for contact with the battery, a spring holder 13 mounted in the receiving chamber 11 between the metal contact plates 12, and a compression spring 14 supported in the spring holder 13. The housing also includes a cover unit 15 that covers the receiving chamber 11. The cover unit 15 includes a front cover plate 16, an intermediate cover plate 17, and a rear cover plate 18.

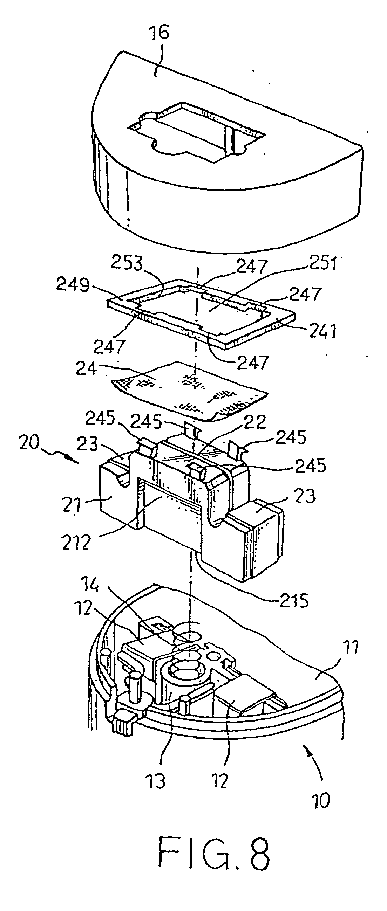

The heating unit 20 includes a heat insulative base 21, an electric heating wire 22, a pair of metal locating plates 23, a heat resistant cover sheet 24, and a frame 241. The heat resistant cover sheet 24 is held within the frame 241. The heat insulative base 21 includes a protrusive portion 211 in the middle, two coupling recessed portions 212 at two opposite lateral sides, and opposite bottom edges 215. The metal locating plates 23 are fastened to the heat insulative base 21 at two opposite locations. The electric heating wire 22 is mounted on the protrusive portion 211 of the heat insulative base 21, and secured in place by the metal locating plates 23. The frame 241 is mounted around the protrusive portion 211 of the heat insulative base 21 to hold down the heat resistant cover sheet 24 on the protrusive portion 211 over the electric heating wire 22. The frame 241 includes a top portion 249 having defined therein an opening 251 and a plurality of downwardly extending hooks 242. The frame 241 is secured to the heat insulative base 21 by engaging the hooks 242 in the coupling recessed portions 212. In an alternative embodiment, the heat insulative base 21 includes a plurality of upwardly extending hooks 245. In this embodiment, the frame 241 is secured to the heat insulative base 21 by engaging the hooks 242 in the coupling recessed portions 212. In an alternative embodiment, the heat insulative base 21 includes a plurality of upwardly extending hooks 245. In this embodiment, the frame 241 is secured to the heat insulative base 21 by engaging the hooks 245 in a plurality of recesses 247 located on the interior edge 253 of the frame top portion 249 of the frame 241 as shown in Figure 8. It will be understood that the frame 241 can be secured to the heat insulating base 21 in a number of different ways. For example, threaded fasteners or snaps can be provided, the frame may be threaded, the frame may be hinged to the housing, the frame may be integral with the housing. Any method of securing the frame 241 to the heat insulating base is within the scope of the present invention. In the embodiment shown in Figure 8, the heat insulative base preferably comprises a suitable plastic in particular a heat resistant plastic.

The heat resistant cover sheet 24 and the frame can be fastened together by directly molding the frame 241 on the heat resistant cover sheet 24 or by adhering the heat resistant cover sheet 24 to the frame 241 using an adhesive. The frame 241 is preferably comprised of a plastic, and can be directly molded on the heat resistant cover sheet 24 by injection molding.

The electric heating wire 22 can vary in thickness. Preferably, the thickness of the electric heating wire varies within the range of 0.10 mm to 0.50 mm. However, it will be understood that the electric heating wire 22 of the present invention can be any thickness.

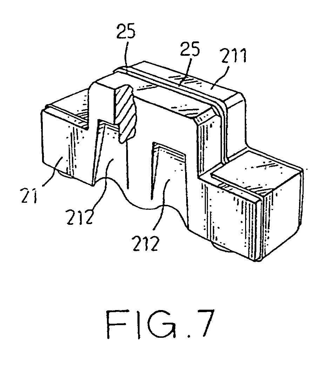

In another preferred embodiment, as shown in Figure 7, a plurality of electric heating wires 25 is employed. The electric heating wires 25 are mounted on the protrusive portion 211 of the heat insulative base 21, and secured in place by the metal locating plates 23. Any number of electric heating wires 25 is within the scope of the invention.

Referring to Figure 1 again, the press unit 30 is pivotally connected to one end of the housing 10. The press unit 30 includes a heat insulative block 31. When the press unit 30 is pressed down, the heat insulative block 31 presses on the heat resistant cover sheet 24, and against the electric heating wire 22 and the protrusive portion 211 of the heat insulative base 21.

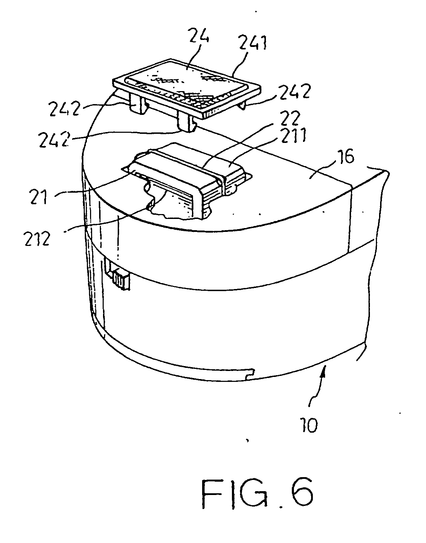

Referring to Figure 6, when replacing the heat resistant cover sheet, the downwardly extending hooks 242 of the frame 241 are disengaged from the heat insulative base 21. The used heat resistant cover sheet is then removed from the frame 241 and replaced with a new heat resistant cover sheet 24. The frame 241 is then fastened to the heat insulative base 21 to secure the new heat resistant cover sheet 24 to the protrusive portion 211 of the heat insulative base 21 and at least partially over the electric heating wire 22. Alternatively, when frame 241 is molded or adhered to cover sheet 24, thus forming a single unit, the entire unit can be removed and replaced with a new frame 241 and cover sheet 24.

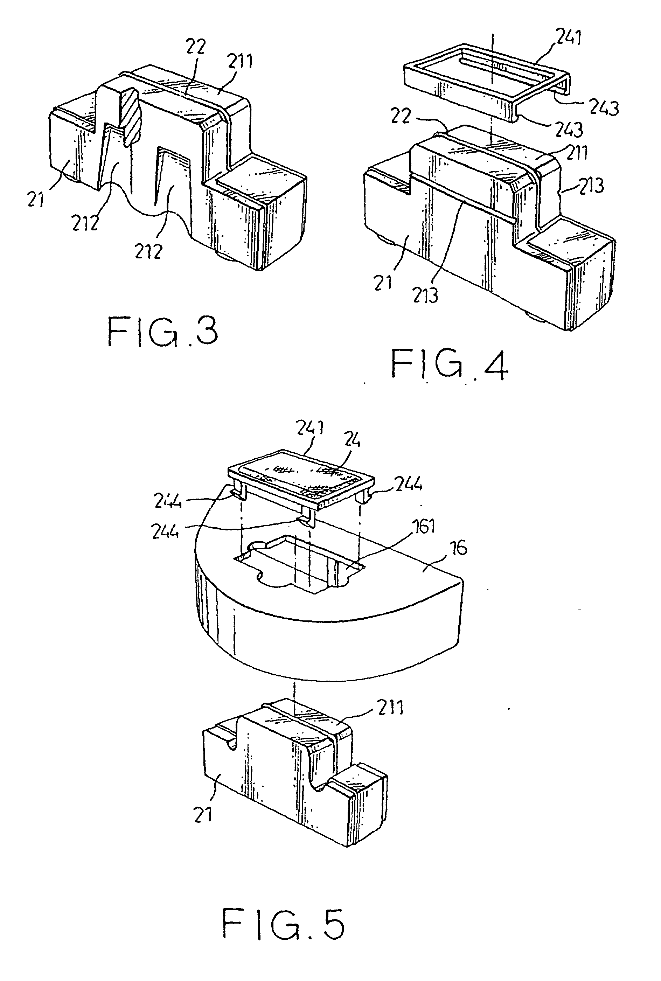

Referring to Figures 3 to 5, alternative embodiments of the heat insulative base 21 as well as the frame 241 are also included within the scope of the present invention. In Figure 3, the heat insulative base 21 has two symmetrical pairs of coupling recessed portions 212 at two opposite sides for engagement with the downwardly extending hooks 242 of the frame 241. The heat resistant cover sheet 24 can be a meshed sheet member made from a heat resistant material, such as TEFLON (polytetrafluoroethylene) or the like, that provides a smooth surface and protects the electric heating wire 22. In a preferred embodiment, the heat resistant cover sheet 24 is in the range of 5.0 mm to 9.0 mm wide and 8.0 mm to 12.0 mm long. However, it will be understood that the size of the heat resistant cover sheet 24 is not a limitation. Any width and length of the heat resistant cover sheet 24 are within the scope of the present invention.

Alternatively, the heat resistant cover sheet 24 can have an adhesive thereon for adhering the heat resistant cover sheet 24 to the electric heating wire 22 and the protrusive portion 211 of the heat insulative base 21. The adhesive can be a special adhesive that will not damage the electric heating wire 22 when the heat resistant cover sheet 24 is removed, thereby allowing the heat resistant cover sheet 24 to be temporary and replaceable.

In Figure 4, the heat insulative base 21 includes two horizontal coupling grooves 213 at two opposite lateral sides. The frame 241 has two coupling flanges 243 for engaging the horizontal coupling grooves 213 of the heat insulative base 21.

In Figure 5, the frame 241 has a plurality of downwardly extending hooks 244 respectively hooked in the peripheral edge of an opening 161 on the front cover plate 16.

According to an alternative embodiment, housing 10 has a continuous upper surface and a bottom plate, rather than a cover unit 15 including front cover plate 16 with opening 161. The upper surface of housing 10 has defined therein an opening through which protrusive portion 211 of heat insulative base 21 protrudes. Frame 241 engages the opening defined in the upper surface.

## Claims

1. A hand-held electric sealer comprising a housing (10), a heating unit (20) mounted in said housing including an electric heating wire (22), a heat resistant cover sheet (24) covering at least a portion of said electric hearing wire, and a press unit (30) pivotally connected to said housing and acting against said heating unit, **characterised in that** a heat insulative base (21) has a protrusive portion (211) on which said electric heating wire (22) is mounted, and said heat resistant cover sheet (24) is held within a frame (241) comprising retainer means (242, 243, 254; 212, 213, 247) so that said heat resistant cover sheet is removably secured over said protrusive portion (211) and over at least said portion of said electric heating wire (22) so that the cover sheet (24) can be removed for replacement without separating the press unit (30) from the housing (10).

2. A hand-held electric sealer according to claim 1 wherein said retainer means (242, 243, 254; 212, 213, 247) engage said protrusive portion (211).

3. A hand-held electric sealer according to claim 2 **characterised in that** said heat insulative base (21) has defined therein a plurality of recessed portions (212) disposed on opposite sides of said protrusive portion (211), and said retainer means of said frame comprises a plurality of downwardly extending hooks (242) respectively engaged in said recessed portions (212) of said heat insulative base.

4. A hand-held electric sealer according to claim 2 **characterised in that** said heat insulative base (21) has defined therein two coupling grooves (213) on opposite sides of said protrusive portion (211), and said retainer means of said frame comprise two coupling flanges (243) on opposite sides thereof that respectively engage said coupling grooves on said heat insulative base.

5. A hand-held electric sealer according to claim 1, wherein said retainer means (242, 243, 245;212, 213, 247) engage said housing (10) to removably secure said heat resistant cover sheet over said protrusive portion (211) and at least said portion of said electric heating wire.

6. A hand-held electric sealer according to claim 5 **characterised in that** said housing (10) comprises a front cover plate (16) having defined therein an opening (251) in register with said protrusive portion (211) of said heat insulative base (21), and said retainer means of said frame (241) is fastened to a peripheral edge (253) of said opening on said front cover of said housing, thereby enabling said heat resistant cover sheet (24) to cover at least said portion of said electric heating wire.

7. A hand-held electric sealer according to claim 5 **characterised in that** said housing (10) has defined therein an opening (251) having a peripheral edge (253), and wherein said retainer means of said frame comprises a plurality of hooks (245) respectively engaging said peripheral edge of said opening in said top cover (16) of said housing.

8. A hand-held electric sealer according to any preceding claim **characterised in that** said heat resistant cover sheet (24) is a meshed member made from polytetrafluoroethylene.

9. A hand-held electric sealer according to any preceding claim **characterised in that** said frame (241) is comprised of a plastics material and is moulded on said heat resistant cover sheet (24).

10. A hand-held electric sealer according to any of claims 1 to 8 **characterised in that** said heat resistant cover sheet (24) is detachably affixed to said frame (241).

11. A hand-held electric sealer according to any preceding claim **characterised in that** said heating unit (20) comprises a plurality of electric heating wires (25) secured to said heat insulative base (21).

12. A hand-held electric sealer according to any preceding claim **characterised in that** said press unit (30) comprises a heat insulative block (31), and said press unit is pivotally movable downwardly for engagement of said heat insulative block with an object to be sealed which is supported on a protrusive portion (211) of said heat insulative base (21).

## Patentansprüche

1. Elektrisches Handschweißgerät, umfassend ein Gehäuse (10), eine Heizeinheit (20), die in dem Gehäuse montiert ist und einen elektrischen Heizdraht (22) beinhaltet, eine hitzebeständige Abdeckfolie (24), die zumindest einen Bereich des elektrischen Heizdrahts abdeckt, und eine Presseneinheit (30), die schwenkbar mit dem Gehäuse verbunden ist und gegen die Heizeinheit wirkt, **dadurch gekennzeichnet, dass** eine hitzeisolierende Basis (21) einen vorragenden Bereich (211) aufweist, auf welchem der elektrische Heizdraht (22) montiert ist, und die hitzebeständige Abdeckplatte (24) innerhalb eines Rahmens (241) gehalten ist, der Rückhaltemittel (242, 243, 254; 212, 213, 247) umfasst, so dass die hitzebeständige Abdeckfolie entfernbar über dem vorragenden Bereich (211) und über zumindest dem besagten Bereich des elektrischen Heizdrahts (22) so gesichert ist, dass die Abdeckfolie (24) zum Austauschen entfernt werden kann, ohne die Presseneinheit (30) vom Gehäuse (10) zu trennen.

2. Elektrisches Handschweißgerät gemäß Anspruch 1, wobei das Rückhaltemittel (242, 243, 254; 212, 213, 247) in Eingriff mit dem vorragenden Bereich (211) ist.

3. Elektrisches Handschweißgerät gemäß Anspruch 2, **dadurch gekennzeichnet, dass** die hitzeisolierende Basis (21) in sich eine Mehrzahl von vertieften Bereichen (212) definiert hat, die auf entgegengesetzten Seiten des vorragenden Bereichs (211) angeordnet sind, und die Rückhaltemittel des Rahmens eine Mehrzahl von sich abwärts erstreckenden Hacken (242) umfassen, die jeweils in Eingriff mit den vertieften Bereichen (212) der hitzeisolierenden Basis sind.

4. Elektrisches Handschweißgerät gemäß Anspruch 2, **dadurch gekennzeichnet, dass** die hitzeisolierende Basis (21) in sich zwei koppelnde Rillen (213) auf entgegengesetzten Seiten des vorragenden Bereichs (211) definiert aufweist und das Rückhaltemittel des Rahmens zwei koppelnde Flansche (243) auf entgegengesetzten Seiten davon umfasst, die jeweils in Eingriff mit den koppelnden Rillen auf der hitzeisolierenden Basis sind.

5. Elektrisches Handschweißgerät gemäß Anspruch 1, wobei das Rückhaltemittel (242, 243, 245; 212, 213, 247) in Eingriff mit dem Gehäuse (10) steht, um die hitzebeständige Abdeckfolie abnehmbar über dem vorragenden Bereich (211) und zumindest dem besagten Bereich des elektrischen Heizdrahts zu sichern.

6. Elektrisches Handschweißgerät gemäß Anspruch 5, **dadurch gekennzeichnet, dass** das Gehäuse (10) eine Frontabdeckplatte (16) umfasst, die in sich eine Öffnung (251) in Passung mit dem vorragenden Bereich (211) der hitzeisolierenden Basis (21) definiert aufweist, und das Rückhaltemittel des Rahmens (241) an einer Randkante (253) der Öffnung auf der Frontabdeckung des Gehäuses befestigt ist, wodurch der hitzebeständigen Abdeckfolie (24) ermöglicht wird, zumindest den Bereich des elektrischen Heizdrahts abzudecken.

7. Elektrisches Handschweißgerät gemäß Anspruch 5, **dadurch gekennzeichnet, dass** das Gehäuse (10) in sich eine Öffnung (251) mit einer Randkante (253) definiert aufweist, und wobei das Rückhaltemittel des Rahmens eine Mehrzahl von Haken (245) umfasst, die jeweils in Eingriff mit der Randkante der Öffnung in der oberen Abdeckung (16) des Gehäuses sind.

8. Elektrisches Handschweißgerät gemäß einem der vorstehenden Ansprüche, **dadurch gekennzeichnet, dass** die hitzebeständige Abdeckfolie (24) ein Maschenelement ist, das aus Polytetrafluorethylen hergestellt ist.

9. Elektrisches Handschweißgerät gemäß einem der vorstehenden Ansprüche, **dadurch gekennzeichnet, dass** der Rahmen (241) aus einem Kunststoffmaterial besteht und auf der hitzebeständigen Abdeckfolie (24) geformt ist.

10. Elektrisches Handschweißgerät gemäß einem der Ansprüche 1 bis 8, **dadurch gekennzeichnet, dass** die hitzebeständige Abdeckfolie (24) abnehmbar an dem Rahmen (241) befestigt ist.

11. Elektrisches Handschweißgerät gemäß einem vorstehenden Anspruch, **dadurch gekennzeichnet, dass** die Heizeinheit (20) eine Mehrzahl von elektrischen Heizdrähten (25) umfasst, die an der hitzeisolierenden Basis (21) befestigt sind.

12. Elektrisches Handschweißgerät gemäß einem vorstehenden Anspruch, **dadurch gekennzeichnet, dass** die Presseneinheit (30) einen hitzeisolierenden Block (31) umfasst und die Presseneinheit abwärts schwenkbar zum Eingriff des hitzeisolierenden Blocks in ein zu verschweißendes Objekt beweglich ist, das auf einem vorstehenden Bereich (211) der hitzeisolierenden Basis (21) gehaltert ist.

## Revendications

1. Dispositif de soudage électrique à main comprenant un boîtier (10), un ensemble de chauffage (20) monté dans ledit boîtier comprenant un fil électrique chauffant (22), une feuille de recouvrement résistante à la chaleur (24) qui recouvre au moins une partie dudit fil électrique chauffant, et un ensemble presseur (30) connecté en pivotement audit boîtier et en appui contre ledit ensemble de chauffage, **caractérisé en ce qu'**une embase calorifuge (21) comporte une partie en saillie (211) sur laquelle est monté ledit fil électrique chauffant (22), et **en ce que** ladite feuille de recouvrement résistante à la chaleur (24) est maintenue à l'intérieur d'un châssis (241) comprenant des moyens de retenue (242, 243, 254 ; 212, 213, 247) aménagés de telle sorte que la feuille de recouvrement résistante à la chaleur est fixée de manière amovible sur ladite partie en saillie (211) et sur au moins ladite partie dudit fil électrique chauffant (22) de manière à pouvoir enlever la feuille de recouvrement (24) à des fins de remplacement sans séparation de l'ensemble presseur (30) du boîtier (10).

2. Dispositif de soudage électrique à main selon la revendication 1 dans lequel lesdits moyens de retenue (242, 243, 254 ; 212, 213, 247) s'engagent avec ladite partie en saillie (211 ).

3. Dispositif de soudage électrique à main selon la revendication 2, **caractérisé en ce que** ladite embase calorifuge (21) comprend une pluralité de parties en retrait (212) aménagées sur des côtés opposés de ladite partie en saillie (211), et **en ce que** lesdits moyens de retenue dudit châssis comprennent une pluralité de crochets s'étendant vers le bas (242) qui s'engagent respectivement dans lesdites parties en retrait (212) de ladite embase calorifuge.

4. Dispositif de soudage électrique à main selon la revendication 2 **caractérisé en ce que** ladite embase calorifuge (21) comprend deux gorges d'accouplement (213) aménagées sur des côtés opposés de ladite partie en saillie (211), et **en ce que** lesdits moyens de retenue dudit châssis comprennent deux brides d'accouplement (243) aménagées sur des côtés opposés de ceux-ci qui s'engagent respectivement dans lesdites gorges d'accouplement aménagées sur ladite embase calorifuge.

5. Dispositif de soudage électrique à main selon la revendication 1, dans lequel lesdits moyens de retenue (242, 243, 245 ; 212, 213, 247) s'engagent dans ledit boîtier (10) afin de fixer de manière amovible ladite feuille de recouvrement résistante à la chaleur sur ladite partie en saillie (211) et au moins sur ladite partie dudit fil électrique chauffant.

6. Dispositif de soudage électrique à main selon la revendication 5 **caractérisé en ce que** ledit boîtier (10) comprend une plaque de recouvrement avant (16) comprenant une ouverture (251) en adéquation avec ladite partie en saillie (211) de ladite embase calorifuge (21), et **en ce que** lesdits moyens de retenue dudit châssis (241) sont fixés sur un bord périphérique (253) de ladite ouverture aménagée sur ladite plaque de recouvrement avant dudit boîtier, ce qui permet à ladite feuille de recouvrement résistante à la chaleur (24) de recouvrir au moins ladite partie dudit fil électrique chauffant.

7. Dispositif de soudage électrique à main selon la revendication 5 **caractérisé en ce que** ledit boîtier (10) comprend une ouverture (251) comportant un bord périphérique (253), et dans lequel lesdits moyens de retenue dudit châssis comprennent une pluralité de crochets (245) qui s'engagent respectivement avec ledit bord périphérique de ladite ouverture aménagée dans ladite plaque de recouvrement supérieure (16) dudit boîtier.

8. Dispositif de soudage électrique à main selon l'une quelconque des revendications précédentes, **caractérisé en ce que** ladite feuille de recouvrement résistante à la chaleur (24) est un élément maillé fabriqué à partir de polytétrafluoroéthylène.

9. Dispositif de soudage électrique à main selon l'une quelconque des revendications précédentes, **caractérisé en ce que** ledit châssis (241) est fabriqué à partir d'une matière plastique et est moulé sur ladite feuille de recouvrement résistante à la chaleur (24).

10. Dispositif de soudage électrique à main selon l'une quelconque des revendications 1 à 8, **caractérisé en ce que** ladite feuille de recouvrement résistante à la chaleur (24) est fixée de manière amovible sur ledit châssis (241 ).

11. Dispositif de soudage électrique à main selon l'une quelconque des revendications précédentes, **caractérisé en ce que** ledit ensemble de chauffage (20) comprend une pluralité de fils électriques chauffants (25) fixés sur ladite embase calorifuge (21).

12. Dispositif de soudage électrique à main selon l'une quelconque des revendications précédentes, **caractérisé en ce que** ledit ensemble presseur (30) comprend un bloc calorifuge (31), et **en ce que** ledit ensemble presseur est mobile en pivotement vers le bas afin d'engager ledit bloc calorifuge avec un objet devant être soudé qui est supporté par une partie en saillie (211) de ladite embase calorifuge (21).
